# EUROPÄISCHE PATENTSCHRIFT

(11) **EP 3 103 350 B1**
(45) Veröffentlichungstag und Bekanntmachung des Hinweises auf die Patenterteilung: **21.02.2018**
(21) Anmeldenummer: 15172002.6
(22) Anmeldetag: 13.06.2015
(51) Int. Cl.: A23C 21/00, A23C 9/142, A23J 1/20

(54) **VERFAHREN ZUR HERSTELLUNG VON KEIMARMEN MOLKENPROTEINKONZENTRATEN**
PROCESS FOR THE PREPARATION OF WHEY PROTEIN CONCENTRATES LOW IN GERMES
PROCÉDÉ POUR LA PREPARATION DES CONCENTRATES DE PROTÉINES DU PETIT-LAIT REDUITES EN GERMES

(43) Veröffentlichungstag der Anmeldung: 14.12.2016
(73) Patentinhaber: DMK Deutsches Milchkontor GmbH, 27404 Zeven (DE)
(72) Erfinder: Döring, Sven-Rainer, 27404 Zeven (DE)
(74) Vertreter: Fabry, Bernd

(56) Entgegenhaltungen:
- EP-A1- 2 497 368
- EP-A1- 2 661 968
- EP-A1- 2 679 098
- EP-A2- 1 046 344
- WO-A1-96/32021
- WO-A1-2004/091306
- WO-A1-2010/005830

## Beschreibung

### GEBIET DER ERFINDUNG

Die Erfindung befindet sich auf dem Gebiet der Nahrungsmitteltechnologie und betrifft ein verbessertes Verfahren zur Herstellung von Molkenproteinkonzentraten.

### STAND DER TECHNIK

Zur Käseherstellung wird der Milch eine Kultur (Keime) zugegeben; hierdurch erfolgen einerseits die Säuerung und andererseits die Reifung (Aromaausbildung) des Käses. Ein Großteil dieser Kultur verbleibt aber in der Molke und wird im Rahmen des Herstellungsprozesses von Molkenproteinkonzentraten (Whey Protein Concentrates = WPC) durch Filtrationsverfahren mit aufkonzentriert. Typische Volumenkonzentrierungsfaktoren (VKF oder VCF) zur Herstellung von Molkenproteinkonzentraten sind: WPC 35 - VCF 5-7; WPC50 - VCF 10 -15; WPC 60 - VCF 20-25; WPC 80 - VCF 35-45. Im Gleichen Verhältnis des VCF werden auch alle in der Molke enthaltenen Keime und Sporen mit aufkonzentriert. Teilweise werden für die Käseherstellung auch thermophile Keime eingesetzt.

Weitere thermophile Keime und Sporen gelangen über das Futter (Silage) der Kühe in die Milch und werden bei den Klassischen Verfahren der Milchwirtschaft nicht vollständig inaktiviert oder abgetrennt; somit enden diese Keime ebenfalls in der Molke.

Eine Keiminaktivierung mittels Temperaturen oberhalb von 85°C würde zu einer nachteiligen Denaturierung der Molkenproteine und damit zu einem qualitativ minderwertigen Produkt führen. Andererseits wären für die Inaktivierung der thermophilen Keime und Sporen Temperaturen oberhalb von 121°C notwendig.

Die klassische Herstellung von Molkenproteinkonzentraten (WPC 60-90) geht von Molke aus, die zunächst einer Ultrafiltration unterworfen wird, bei der mit dem Permeat Lactose, Asche und Harnstoff abgetrennt werden. Das Retentat wird bei etwa 55 °C über einen Wärmeaustauscher geleitet und dann einer Mikrofiltration unterworfen, bei der mit dem Retentat Fett und Reste an Casein entfernt werden. Hierzu wird typischerweise eine keramische Membran mit einer Porengröße von 0,1 µm verwendet. Das Permeat wird abermals ultrafiltriert und das dabei anfallende dritte Retentat zu einem Konzentrat verarbeitet.

Das Verfahren hat jedoch zwei erhebliche Nachteile: Die Filtrationstemperatur liegt in diesem Falle bei etwa 45 bis 55°C und somit wieder im Wachstumsoptimum der thermophilen Keime und Sporen. Diese durchwachsen die Membran binnen weniger Stunden, dies führt wiederum zur Verschlechterung der mikrobiologischen Qualität des Produktes Die Membran muss nach etwa 8h gereinigt werden, da diese ansonsten verblocken würde. Zum anderen sind resultierenden Produkte immer noch keimbelastet und können daher nicht ohne weiteres weiterverwendet werden.

In diesem Zusammenhang sei auf die EP 1314357 A1 (NESTLE) hingewiesen, aus der ein Verfahren zur Sprühtrocknung von Milchkonzentrat mit hohem Trockengehalt durch Zusatz von Emulgatoren bekannt ist.

Gegenstand der DE 10 2004 039 733 A1 (BURGER) ist ein Verfahren zur Entkeimung von Milch via Ultrafiltration. Der Rahm wird dabei vorher abgetrennt und kann bei höherer Temperatur entkeimt werden.

Das Dokument WO 96/32021 A1 (GALAGEN, INC.) offenbart ein Verfahren zur Mikrofiltration von Milch oder Molke, bei dem die Imunoglobuline abgetrennt werden.

Das Dokument EP 2497368 A (ALOIS MÜLLER) betrifft ein Verfahren zur Gewinnung eines eiweißangereicherten Erzeugnisses aus einem als Retentat einer Ultrafiltration von Molke gewonnenen Molkenproteinkonzentrat, bei dem das Molkenproteinkonzentrat als Zulaufstrom einer Mikrofiltration zugeführt und aus deren Permeatstrom das eiweißangereicherte Erzeugnis gewonnen wird, wobei von dem Retentatstrom der Mikrofiltration ein fettreduzierter Teilstrom separiert und mindestens teilweise zu der Mikrofiltration rezirkuliert wird, wobei die Menge des rezirkulierten Teilstroms im Bereich von 25 bis 75 % der Menge des separierten Teilstroms liegt.

Die CN 20111116530 A1 offenbart ein Verfahren zur Herstellung von Niedrigtemperatur-Milchpulver, bei dem man Magermilch bei 40 bis 50 °C einer Mikrofiltration über eine anorganische Membran mit einem Porendurchmesser von 0,8 bis 1,4 µm filtriert. Anschließend wird das MF-Produkt bei 72-78 °C sterilisiert und bei 45 bis 75 °C in einem Fallfilmverdampfer aufkonzentriert. Es schließt sich eine Sprühtrocknung an, wobei die Temperatur im Einlass bei 180 bis 200 °C und am Ausgang 80 bis 105 °C beträgt.

Schließlich sind aus den beiden Druckschriften EP 2679098 A1 und EP 2732706 A1 (DMK) Verfahren zur Herstellung von keimarmen Milchpulvern mit hohem Molkenproteinindex bekannt, die ebenfalls Filtrationsschritte und Infusionserwärmung umfassen.

Die Aufgabe der vorliegenden Erfindung hat darin bestanden, die Verfahren des Stands der Technik dahingehend zu verbessern, dass mikrobiologisch einwandfreie, d.h. mindestens den gesetzlichen Anforderungen genügende Konzentrate zur Verfügung zu stellen, die mit geringerem Aufwand und höheren Proteingehalt aufwarten.

### BESCHREIBUNG DER ERFINDUNG

Die vorliegende Erfindung betrifft ein Verfahren zur Herstellung von keimarmen Molkenproteinkonzentraten, welches die folgenden Schritte umfasst:
(a) Ultrafiltration von Molke bei einer Temperatur von etwa 2 bis etwa 25 °C zur Erzeugung eines ersten Retentats R1 und eines ersten Permeates P1;
(b) Mikrofiltration des Retentats R1 aus Schritt (a) bei einer Temperatur von etwa 6 bis etwa 35 °C zur Erzeugung eines zweiten Retentats R2 und eines zweiten Permeates P2;
(c) Ultrafiltration des zweiten Permeates P2 aus Schritt (b) bei einer Temperatur von etwa 2 bis etwa 25 °C zur Erzeugung eines dritten Retentats R3 und eines dritten Permeates P3;
(d) Pasteurisierung des Retentates R3 aus Schritt (c)
(e) Trocknung des pasteurisierten Produktes aus Schritt (d).

Die Kombination der Prozessschritte, insbesondere die Abfolge von Ultra- und Mikrofiltrationsschritten, die vorzugsweise auch noch bei niedrigen Temperaturen durchgeführt wird führt, verhindert das Wachstum thermophiler Keime, die durch Temperaturbehandlung nicht vollständig abgetötet werden können. Sofern ein Wachstum mesophiler Keime erfolgt, werden diese im Pasteurisierungsschritt vollständig entfernt. Dies führt zu einem mikrobiell ausgezeichneten Produkt

In der folgenden **Tabelle A** sind die typischen Spezifikationserfordernisse für ein keimarmes Molkenproteinkonzentrat sowie die mit dem erfindungsgemäßen Verfahren erzielten Ergebnisse zusammengefasst:

**Tabelle A**

| Spezifikation keimarmes Pulver | | | |
|---|---|---|---|
| **Keimart** | **Methode** | **Anforderung** | **Erfindung** |
| Mesophile Sporen | 10 min 80°C / 30°C | max. 500/g | 100/g |
| Thermophile Sporen | a) 10 min 80°C / 55°C | max. 500/g | 100/g |
| | b) 30 min 100°C / 55°C | | |
| Bacillus Cereus | 10 min 80°C / 30°C selektiver Nährboden | < 10/g | < 10/g |
| Thermophile Keime | 55°C | max. 500/g | 100/g |
| Sulfitreduzierende Sporen | 10 min 80°C / 37°C (MPN Selektivbouil-lon) | max. 10/g | < 10/g |
| Clostridium perfringens | 10 min / 80°C | max.10/g bis neg/g | < 10/g |
| Salmonella | LFGB § 64 modf. | neg in 750 - 1500g | neg in 1500g |
| Enterobacter sakazakii | Selektivnährboden | neg in 375 - 750g | neg in 1500g |

### FILTRATIONSSCHRITTE

Kern des erfindungsgemäßen Verfahrens ist die Abfolge von erster Ultrafiltration, Mikrofiltration und zweiter Ultrafiltration. Der wesentliche Unterschied zwischen der Mikro- und der Ultrafiltration liegt in den verschiedenen Porengrößen und in der unterschiedlichen Membranstruktur wie den Werkstoffen und den beteiligten Filtermaterialien. Eine Filtration durch Membranen mit einer Porengröße < 0,1 µm wird in der Regel Ultrafiltration genannt, während die Filtration bei Porengrößen > 0,1 µm gewöhnlich als Mikrofiltration bezeichnet wird. In beiden Fällen handelt es sich um rein physikalische, d.h. mechanische Membrantrennverfahren, die nach Prinzip des mechanischen Größenausschlusses arbeiten: alle Partikel in den Fluiden, die größer als die Membranporen sind, werden von der Membran zurückgehalten. Treibende Kraft in beiden Trennverfahren ist der Differenzdruck zwischen Zulauf und Ablauf der Filterfläche, der zwischen 0,1 und 10 bar liegt. Der Werkstoff der Filterfläche kann je Einsatzgebiet aus Edelstahl, Kunststoff, Keramik oder textilen Gewebe bestehen. Es gibt verschiedene Erscheinungsformen der Filterelemente: Kerzenfilter, Flachmembranen, Spiralwickelmodule, Taschenfilter und Hohlfasermodule, die im Sinne der vorliegenden Erfindung alle grundsätzlich geeignet sind.

In der Milchtechnik hat bislang das Vorurteil geherrscht, zur Abtrennung von Mikroorganismen in Milchfraktionen dürfe der Porendurchmesser generell einen Wert von 0,5 µm nicht unterschreiten. Die Erfindung schließt jedoch die Erkenntnis ein, dass zur Herstellung einer eines mikrobiell ausgezeichneten Molkenproteinkonzentrates im Mikrofiltrationsschritt ein Durchmesser im Bereich von 0,8 bis sogar 1,6 µm und vorzugsweise 1,1 bis 1,4 µm völlig ausreichend ist, wenn zuvor die Mehrzahl der Keime Ultrafiltration abgetrennt worden ist. In Kombination dieses im Vergleich größeren Porendurchmessers mit einer Mikrofiltrationseinrichtung, die im Wesentlichen aus einer Keramikmembran besteht, wird gleichzeitig das Problem der häufigen Verstopfung gelöst.

Des Weiteren besteht das Vorurteil, dass die Abtrennung von Keimen mit Hilfe von Filtrationsschritten eine Temperatur von mindestens 55 °C erfordert, da nur unter diesen Bedingungen ausreichende Durchsätze von etwa 450 bis 550 lm²h erzielt werden können, während bei Temperaturen von beispielsweise 20 bis 30 °C nur Durchflusswerte von maximal 100 l/m²h erzielt werden. Die Filtration in der Wärme hat indes den wesentlichen Nachteil, dass die thermoresistenten Keime und Sporen nach etwa 4 Stunden Filtrationszeit beginnen, die Membranen zu durchwachsen und sich wieder im Permeat zu vermehren. Im Rahmen des erfindungsgemäßen Verfahrens besteht daher ein besonderer Vorteil darin, die Ultrafiltration in der Kälte, also bei 4 bis 25 und insbesondere 6 bis 12°C und die Mikrofiltration ebenfalls bei niedrigen Temperaturen von etwa 6 bis etwa 30 °C und insbesondere etwa 12 bis etwa 25 °C durchzuführen, da das Durchwachsen der Keime auf diese Weise verhindert und dennoch überraschenderweise ein Durchfluss von 200 bis 300 l/m²h erzielt wird.

### PASTEURISIERUNG

Die Wärmebehandlung des Permeates aus dem letzten Filtrationsschritt erfolgt vorzugsweise in Wärmeaustauschern, wobei sich speziell Plattenwärmeaustauscher als besonders geeignet erwiesen haben. An den Wärmeaustauschern liegt ein Temperaturgradient an, der jedoch so gewählt ist, dass das Permeat für eine Verweilzeit von mindestens 20 und höchstens 60 Sekunden, vorzugsweise etwa 30 Sekunden auf eine Temperatur von etwa 70 bis 80 °C und insbesondere etwa 72 bis 74 °C erhitzt wird.

### Direct Steam Injection

In einer ersten alternativen Ausführungsform kann das Permeat auch durch Direct Steam Injection (DSI) pasteurisiert werden. Dies hat den Vorteil, dass das langsame Durchlaufen eines Temperaturbereiches, in dem mesophile und thermophile Sporen optimale Wachstumsbedingungen vorfinden, durch eine blitzartige Erwärmung signifikant verkürzt wird. Dies wird durch die direkte Einspritzung von heißem oder sogar überhitztem Wasserdampf erreicht, der eine Temperatur von 100 bis etwa 250 °C aufweisen kann. Üblicherweise erfolgt dies mit Hilfe von Düsen, die entweder direkt in das Produkt eintauchen oder in einer Ableitung des Wärmeaustauschers eingebaut sind.

Das Prinzip von DSI besteht darin, dass ein unter Druck stehender hocherhitzter Wasserdampfstrahl in eine Düsenkammer geleitet wird und sich dann durch ein perforiertes Rohr ("Radial Steam Jet Diffuser") in das zu erhitzende flüssige Produkt entspannt. Der Hochdruckstrom erzeugt ein sich mit hoher Geschwindigkeit ausbreitendes radiales Wärmeaustauschfeld, wodurch eine gleichmäßige Erhitzung des Produktes in sehr kurzen Zeiten erreicht wird.

Wie eingangs erläutert, besteht das Ziel darin, das Milchprodukt in sehr kurzer Zeit, vorzugsweise 1 bis etwa 5 Sekunden und insbesondere 1 bis 2 Sekunden auf eine exakte Temperatur einzustellen. Dazu ist es erforderlich, eine möglichst präzise Menge an Dampf mit hoher Geschwindigkeit in das Produkt einzuleiten. Erfolgt die Kontrolle der Dampfmenge über ein Druckminderventil, fällt die Geschwindigkeit des Dampfes in der Regel unter die Schallgeschwindigkeit, was dazu führt, dass sich das Produkt nicht schnell genug erhitzt. Um dies zu verhindern wird der Dampf im Sinne des erfindungsgemäßen Verfahrens vorzugsweise unter so-genannten "choke-flow" Bedingungen eingespeist, weil dies erlaubt, Dampf auch mit Ultraschallgeschwindigkeit direkt in das zu erhitzende Produkt einzuleiten. Hierunter versteht man das Phänomen, die Dampfgeschwindigkeit zu steigern, indem man eine Druckdifferenz mit Hilfe einer speziellen Düse erzeugt. Entsprechende Bauteile sind beispielsweise von der Firma ProSonics im Handel erhältlich.

Die DSI erfordert keine Vorerwärmung des Einsatzstoffes, d.h. das Permeat aus Schritt (c) kann unmittelbar verwendet werden. Allerdings ist die Temperaturführung umso präziser, je geringer die Temperaturunterschiede sind.

### Infusion

In einer zweiten alternativen Ausführungsform kann das Permeat auch durch (Dampf-)Infusion pasteurisiert werden. Dieses Verfahren ist seit den 1960er Jahren bekannt. Grundsätzlich kann die Erwärmung in zwei Schritten durchgeführt werden, wobei das zu erhitzende Gut in eine mit Heißdampf gefüllte Druckkammer eingedüst wird und die Erwärmung bzw. Pasteurisierung auf dem Fallweg der Tröpfchen erfolgt. Seit dem Jahr 2000 hat indes der so genannte PDX-Prozess an Bedeutung gewonnen. Dabei wird das zu erwärmende Gut vaporisiert und in einem Strom überhitzten Wasserdampfs schlagartig erwärmt. Der sich mit Überschallgeschwindigkeit vorwärtsbewegende Dampfstrom verteilt die Produkttröpfchen homogen, so dass ein Mehrphasenstrom entsteht, wobei die Erhitzung schonend nur an den Grenzflächen der Tröpfchen stattfindet. Auf diese Weise gleichzeitig wird eine Kondensation der Tröpfchen bewirkt. Der Wasserdampf kann dabei eine Temperatur von etwa 100 bis etwa 250 °C und insbesondere etwa 120 bis etwa 150 °C aufweisen, die Infusion benötigt eine Zeit von typisch 1 bis 5 und insbesondere etwa 2 bis 3 Sekunden.

In einer weiteren bevorzugten Ausgestaltung erfolgt die Infusionserwärmung dergestalt, dass Produkt und Dampf abwechselnd über konzentrische Ringdüsen in einen Reaktor versprüht werden, so dass von innen nach außen ein Dampfdruckgradient entsteht. Dadurch werden die Tröpfchen von der Wandung ferngehalten und können nicht verbrennen.

### Flash Kühlung

Ebenfalls wünschenswert ist es, auch beim Abkühlen den für das Keimwachstum kritischen Temperaturbereich möglichst schnell zu durchlaufen. Hierzu hat sich eine Flashkühlung als besonders wirksam erwiesen. Hierunter versteht man ein Verfahren, bei dem das heiße flüssige Produkt unter turbulenten Strömungsbedingungen in einen unter verminderten Druck stehenden Reaktor "eingeflasht" wird, so dass der Siedepunkt des Wassers unter 30 °C abgesenkt wird. Zur Unterstützung kann der Mantel des Flashreaktors zusätzlich noch gekühlt werden. Die Abkühlung des pasteurisierten Produktes benötigt etwa 1 bis 5 Sekunden, wobei die Endtemperatur üblicherweise bei etwa 25 bis etwa 30 °C liegt.

### TROCKNUNG

Die Trocknung der pasteurisierten Produkte kann in an sich bekannter Weise erfolgen. Vorzugsweise kommt dabei die Sprühtrocknung zum Zuge, wobei die Temperatur im Einlass typischerweise etwa 180 bis etwa 260 °C und am Ausgang etwa 80 bis etwa 105 °C beträgt. Niedrige Temperaturen sind bevorzugt, da auf diese Weise die Gefahr verringert wird, dass die Proteine denaturieren. Alternativ können die Produkte auch durch Gefriertrocknung entwässert werden.

Den homogenisierten Konzentraten können vor dem Versprühen auch weitere Zusatzstoffe zugesetzt werden, wie beispielsweise Lecithine, Vitamine oder Lebensmittelemulgatoren [EP 1314367 A1, NESTLE] und dergleichen.

Die auf diesem Wege erhaltenen Molkenproteinkonzentrate weisen einen Proteingehalt von wenigstens 60 Gew.-% und vorzugsweise etwa 65 bis etwa 90 Gew.-% und insbesondere etwa 70 bis etwa 85 Gew.-%.

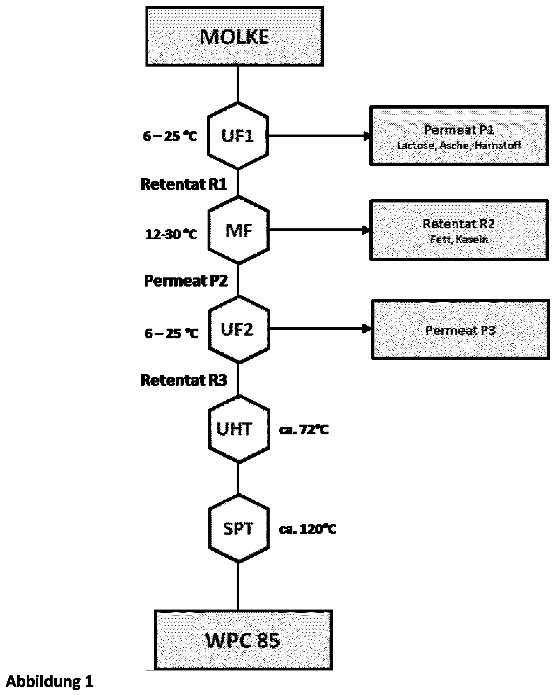

Das Verfahren wird in **Abbildung 1** noch einmal schematisch zusammengefasst. Dabei bedeuten die Abkürzungen:
- UF1: = 1. Ultrafiltration
- MF: = Mikrofiltration
- UF2: = 2. Ultrafiltration
- UHT: = Ultrahocherhitzung = Pasteurisierung
- SPT: = Sprühtrocknung
- MPC85: = Molkenproteinkonzentrat mit 85 Gew.-% Proteinanteil

### BEISPIELE

### BEISPIEL 1

1.000 kg Molke wurden bei einer Temperatur von 8 °C einer Ultrafiltration unterworfen, bei der eine Spiralwickelmembran mit einem Porendurchmesser von 0,05 µm zum Einsatz kam. Mit dem Permeat wurden Lactose, Asche und Harnstoff abgetrennt und verworfen, während das Retentat nach Passieren eines Wärmeaustauschers, in dem es auf 25 °C vorgewärmt wurde, einer Mikrofiltration zugeführt wurde. Hier wurde eine Keramikmembran mit einem Porendurchmesser von 1,1 µm eingesetzt. Das Retentat, welches Fett und Casein enthielt, wurde verworfen, während das Permeat bei 25 °C einer zweiten Ultrafiltration unterworfen wurde, die wiederum mit einer Spiralwickelmembran mit einem Porendurchmesser von 0,05 µm durchgeführt wurde. Das Permeat wurde verworfen, das Retentat jedoch einer Pasteurisierung in einem Hocherhitzer zugeführt, in dem es 30 Sekunden auf 72 °C erhitzt wurde. Anschließend wurde das pasteurisierte Produkt in einen Sprühturm überführt, in dem es bei einer Einlasstemperatur von 200 bis 220 °C (Auslasstemperatur: 80 °C) von Wasser befreit wurde. Es wurden ca. 4,5 kg eines keimfreien, rieselfähigen Molkenproteinkonzentrates erhalten, welches einen Proteingehalt von 85 Gew.-% aufwies. Die Standzeit der Mikrofiltrationsmembran betrug dabei mindestens 24 Stunden.

### BEISPIEL 2

Beispiel 1 wurde wiederholt, die Pasteurisierung jedoch mit Hilfe einer DSI durchgeführt. Dazu wurde dem Produkt 2 Sekunden 220 °C heißer Wasserdampf injiziert, wodurch es sich auf ca. 75 °C erhitzte.

### VERGLEICHSBEISPIEL V1

1.000 kg Molke wurden bei einer Temperatur von 8 °C einem Plattenwärmeaustauscher zugeführt und auf 55 °C erhitzt. Anschließend wurde das Produkt einer Ultrafiltration unterworfen, bei der eine Spiralwickelmembran mit einem Porendurchmesser von 0,05 µm zum Einsatz kam. Mit dem Permeat wurden Lactose, Asche und Harnstoff abgetrennt und verworfen, während das Retentat einer Mikrofiltration zugeführt wurde. Hier wurde eine Keramikmembran mit einem Porendurchmesser von 1,1 µm eingesetzt. Das Retentat, welches Fett und Casein enthielt wurde verworfen, während das Permeat bei weiterhin 55 °C einer zweiten Ultrafiltration unterworfen wurde, die wiederum mit einer Spiralwickelmembran mit einem Porendurchmesser von 0,05 µm durchgeführt wurde. Das Permeat wurde verworfen, das Retentat jedoch einer Pasteurisierung in einem Hocherhitzer zugeführt, in dem es 30 Sekunden auf 72 °C erhitzt wurde. Anschließend wurde das pasteurisierte Produkt in einen Sprühturm überführt, in dem es bei einer Einlasstemperatur von 200 bis 220 °C (Auslasstemperatur: 80 °C) von Wasser befreit wurde. Es wurden ca. 4,5 kg eines keimfreien, rieselfähigen Molkenproteinkonzentrates erhalten, welches einen Proteingehalt von 67 Gew.-% aufwies. Die Standzeit der Mikrofiltrationsmembran betrug dabei lediglich 6 Stunden, danach musste das Verfahren unterbrochen und die Membran gereinigt werden.

Beispiel 1 zeigt im Vergleich mit dem Stand der Technik, dass gemäß dem erfindungsgemäßen Verfahren eine größere Konzentratmenge mit höherem Proteingehalt erhältlich ist und dies mit dem zusätzlichen vorteilhaften Effekt deutlich längerer Standzeiten der Membranen verbunden ist.

## Patentansprüche

1. Verfahren zur Herstellung von keimarmen Molkenproteinkonzentraten, umfassend die folgenden Schritte:
(a) Ultrafiltration von Molke bei einer Temperatur von 2 bis 25 °C zur Erzeugung eines ersten Retentats R1 und eines ersten Permeates P1;
(b) Mikrofiltration des Retentats R1 aus Schritt (a) bei einer Temperatur von 6 bis 35 °C zur Erzeugung eines zweiten Retentats R2 und eines zweiten Permeates P2;
(c) Ultrafiltration des zweiten Permeates P2 aus Schritt (b) bei einer Temperatur von 2 bis 25 °C zur Erzeugung eines dritten Retentats R3 und eines dritten Permeates P3;
(d) Pasteurisierung des Retentates R3 aus Schritt (c)
(e) Trocknung des pasteurisierten Produktes aus Schritt (d).

2. Verfahren nach Anspruch 1, **dadurch gekennzeichnet, dass** man die erste und zweite Ultrafiltration unabhängig voneinander bei Temperaturen im Bereich von 2 bis 15 °C durchführt.

3. Verfahren nach den Ansprüchen 1 und/oder 2, **dadurch gekennzeichnet, dass** man die erste und zweite Ultrafiltration unabhängig voneinander mit Membranen durchführt, die einen Porendurchmesser von 0,01 bis 0,1 µm aufweisen.

4. Verfahren nach mindestens einem der Ansprüche 1 bis 3, **dadurch gekennzeichnet, dass** man die Mikrofiltration bei einer Temperatur im Bereich von 6 bis 30 °C durchführt.

5. Verfahren nach Anspruch 4, **dadurch gekennzeichnet, dass** man die Mikrofiltration bei einer Temperatur im Bereich von 12 bis 25 °C durchführt.

6. Verfahren nach mindestens einem der Ansprüche 1 bis 5, **dadurch gekennzeichnet, dass** man die Mikrofiltration mit Membranen durchführt, die einen Porendurchmesser von 0,8 bis 1,6 µm aufweisen.

7. Verfahren nach mindestens einem der Ansprüche 1 bis 6, **dadurch gekennzeichnet, dass** man die Filtrationsschritte mit Membranen durchführt, deren Material ausgewählt ist aus der Gruppe, die gebildet wird von Edelstahl, Kunststoff, Keramik und textilen Gewebe.

8. Verfahren nach mindestens einem der Ansprüche 1 bis 7, **dadurch gekennzeichnet, dass** man die Filtrationsschritte unabhängig voneinander mit Kerzenfiltern, Flachmembranen, Spiralwickelmodulen, Taschenfiltern oder Hohlfasermodulen durchführt.

9. Verfahren nach mindestens einem der Ansprüche 1 bis 8, **dadurch gekennzeichnet, dass** man die Pasteurisierung bei einer Temperatur im Bereich von 70 bis 80 °C durchführt.

10. Verfahren nach mindestens einem der Ansprüche 1 bis 9, **dadurch gekennzeichnet, dass** man die Pasteurisierung über einen Zeitraum von 1 bis 2 Sekunden oder 20 bis 60 Sekunden durchführt.

11. Verfahren nach mindestens einem der Ansprüche 1 bis 10, **dadurch gekennzeichnet, dass** man die Pasteurisierung durch Direct Steam Injection (DSI) oder Dampfinfusion und gegebenenfalls nachfolgender Flash-Kühlung durchführt.

12. Verfahren nach mindestens einem der Ansprüche 1 bis 11, **dadurch gekennzeichnet, dass** man das pasteurisierte Produkt aus Schritt (d) sprühtrocknet.

13. Verfahren nach Anspruch 12, **dadurch gekennzeichnet, dass** man die Sprühtrocknung bei einer Temperatur von 80 bis 260 °C durchführt.

14. Verfahren nach mindestens einem der Ansprüche 1 bis 13, **dadurch gekennzeichnet, dass** man Molkenproteinkonzentrate herstellt, die einen Proteingehalt von mindestens 60 Gew.-% aufweisen

15. Verfahren nach Anspruch 12, **dadurch gekennzeichnet, dass** man Molkenproteinkonzentrate herstellt, die einen Proteingehalt von 65 bis 90 Gew.-% aufweisen.

## Claims

1. A process for the preparation of whey protein concentrates low in germs, comprising the following steps:
(a) ultrafiltrating whey at a temperature of 2 to 25 °C to produce a first retentate R1 and a first permeate P1;
(b) microfiltrating said first retentate R1 from step (a) at a temperature of 6 to 35 °C to obtain a second retentate R2 and a second permeate P2;
(c) ultrafiltrating said the second permeate P2 from step (b) at a temperature of 2 to 25 °C to obtain a third retentate R3 and a third permeate P3;
(d) pasteurizing said third retentate R3 from step (c)
(e) drying said pasteurized product from step (d).

2. Process according to claim 1, **characterized in that** the first and second ultrafiltrations are performed independently from each other at temperatures in the range from 2 to 15 °C.

3. Process according to claims 1 and/or 2, **characterized in that** the first and second ultrafiltrations are performed independently from each other with membranes having an average pore diameter of 0.01 to 0.1 µm.

4. Process according to at least one of claims 1 to 3, **characterized in that** the microfiltration is performed at a temperature in the range from 6 to 30 °C.

5. Process according to claim 4, **characterized in that** the microfiltration is performed at a temperature in the range from 12 to 25 °C.

6. Process according to at least one of claims 1 to 5, **characterized in that** the microfiltration is performed using membranes having an average pore diameter of 0.8 to 1.6 µm.

7. Process according to at least one of claims 1 to 6, **characterized in that** the filtration steps are performed using membranes made from material selected from the group consisting of stainless steel, plastic, ceramic and textile fabric.

8. Process according to at least one of claims 1 to 7, **characterized in that** the filtration steps are performed independently from each other using cartridge filters, flat membranes, spiral wound modules, bag filters or hollow fibre modules.

9. Process according to at least one of claims 1 to 8, **characterized in that** the pasteurization is performed at a temperature in the range from 70 to 80 °C.

10. Process according to at least one of claims 1 to 9, **characterized in that** the pasteurization is performed over a period of 1 to 2 seconds or 20 to 60 seconds.

11. Process according to at least one of claims 1 to 10, **characterized in that** the pasteurization is performed by Direct Steam Injection (DSI) or steam infusion and optionally subsequent flash cooling.

12. Process according to at least one of claims 1 to 11, **characterized in that** the pasteurized product from step (d) is spray dried.

13. Process according to claim 12, **characterized in that** the spray drying is performed at a temperature of 80 to 260 °C.

14. Process according to at least one of Claims 1 to 13, **characterized in that** whey protein concentrates which have a protein content of at least 60 wt.% are prepared.

15. Process according to Claim 12, **characterized in that** whey protein concentrates which have a protein content of 65 to 90 wt.% are prepared.

## Revendications

1. Procédé de fabrication de concentrés de protéine de lactosérum pauvres en germes, comprenant les étapes suivantes :
(a) l'ultrafiltration de lactosérum à une température de 2 à 25 °C pour former un premier rétentat R1 et un premier perméat P1 ;
(b) la microfiltration du rétentat R1 de l'étape (a) à une température de 6 à 35 °C pour former un deuxième rétentat R2 et un deuxième perméat P2 ;
(c) l'ultrafiltration du deuxième perméat P2 de l'étape (b) à une température de 2 à 25 °C pour former un troisième rétentat R3 et un troisième perméat P3 ;
(d) la pasteurisation du rétentat R3 de l'étape (c) ;
(e) le séchage du produit pasteurisé de l'étape (d).

2. Procédé selon la revendication 1, **caractérisé en ce que** la première et la deuxième ultrafiltration sont réalisées indépendamment l'une de l'autre à des températures dans la plage allant de 2 à 15 °C.

3. Procédé selon les revendications 1 et/ou 2, **caractérisé en ce que** la première et la deuxième ultrafiltration sont réalisées indépendamment l'une de l'autre avec des membranes qui présentent un diamètre de pores de 0,01 à 0,1 µm.

4. Procédé selon au moins l'une quelconque des revendications 1 à 3, **caractérisé en ce que** la microfiltration est réalisée à une température dans la plage allant de 6 à 30 °C.

5. Procédé selon la revendication 4, **caractérisé en ce que** la microfiltration est réalisée à une température dans la plage allant de 12 à 25 °C.

6. Procédé selon au moins l'une quelconque des revendications 1 à 5, **caractérisé en ce que** la microfiltration est réalisée avec des membranes qui présentent un diamètre de pores de 0,8 à 1,6 µm.

7. Procédé selon au moins l'une quelconque des revendications 1 à 6, **caractérisé en ce que** les étapes de filtration sont réalisées avec des membranes dont le matériau est choisi dans le groupe formé par l'acier inoxydable, le plastique, la céramique et le tissu textile.

8. Procédé selon au moins l'une quelconque des revendications 1 à 7, **caractérisé en ce que** les étapes de filtration sont réalisées indépendamment les unes des autres avec des filtres à bougie, des membranes plates, des modules enroulés en spirale, des filtres à poche ou des modules à fibres creuses.

9. Procédé selon au moins l'une quelconque des revendications 1 à 8, **caractérisé en ce que** la pasteurisation est réalisée à une température dans la plage allant de 70 à 80 °C.

10. Procédé selon au moins l'une quelconque des revendications 1 à 9, **caractérisé en ce que** la pasteurisation est réalisée pendant une durée de 1 à 2 secondes ou de 20 à 60 secondes.

11. Procédé selon au moins l'une quelconque des revendications 1 à 10, **caractérisé en ce que** la pasteurisation est réalisée par injection de vapeur directe (DSI) ou infusion de vapeur, et éventuellement refroidissement éclair ultérieur.

12. Procédé selon au moins l'une quelconque des revendications 1 à 11, **caractérisé en ce que** le produit pasteurisé de l'étape (d) est séché par pulvérisation.

13. Procédé selon la revendication 12, **caractérisé en ce que** le séchage par pulvérisation est réalisé à une température de 80 à 260 °C.

14. Procédé selon au moins l'une quelconque des revendications 1 à 13, **caractérisé en ce que** des concentrés de protéine de lactosérum qui présentent une teneur en protéine d'au moins 60 % en poids sont fabriqués.

15. Procédé selon la revendication 12, **caractérisé en ce que** des concentrés de protéine de lactosérum qui présentent une teneur en protéine de 65 à 90 % en poids sont fabriqués.
